# EUROPEAN PATENT APPLICATION

(11) **EP 0 604 040 A1**
(43) Date of publication of application: **29.06.1994**
(21) Application number: 93309694.3
(22) Date of filing: 03.12.1993
(51) Int. Cl.: H04J 14/02

(54) **Optical signal identification technique**

(30) Priority: 21.12.1992 US 992308
(71) Applicant: AT&T Corp., New York, NY 10013-2412 (US)
(72) Inventor: Fishman, Daniel A., Lakewood, New Jersey 08701 (US)
(74) Representative: Watts, Christopher Malcolm Kelway, Dr.

(57) **Abstract**

A wavelength-multiplexed optical signal identification technique in which each of the individual optical signals within a multiplexed signal are modulated at a unique low-frequency. This modulation is performed at the transmission site of the optical signal, and the specific frequencies of modulation are chosen to be very much lower than the low-frequency cut-off of any other information encoded upon the optical signals. At the reception site of the multiplexed signal, the invention directs each of the individual optical signals, as a function of the particular low-frequency modulation evident upon each signal, to a particular tunable Fabry-Perot optical filter. As Fabry-Perot filters have the ability to track the frequency of an individual channel, problems associated with wavelength drift are eliminated. Furthermore, Fabry-Perot filters offer a very narrow optical passband, allowing inter-channel cross-talk and noise levels to be minimized within wavelength-multiplexed optical systems employing the signal identification technique.

## Description

### Technical Field

The invention relates to the optical transmission of information and, more particularly, to improving signal demultiplexing within a wavelength-multiplexed optical transmission system.

### Background Of The Invention

Within wavelength-multiplexed optical transmission systems several encoded optical signals (referred to as "channels"), each having a different wavelength, are transmitted simultaneously along a single optical path (typically an optical fiber). At the receiving end of such a system, the optical signals are separated ("demultiplexed"), and individually decoded.

Previous arrangements for demultiplexing wavelength-multiplexed channels have employed bandpass optical filters. In these arrangements, a number of bandpass filters, each fixed at or tuned to the wavelength of a particular channel, are deployed at the receiving end of an optical transmission system. To insulate against cross-talk, and minimize noise, the passband of each of these filters is typically limited to a very narrow window (usually only a fraction of the inter-channel separation).

One of the drawbacks of demultiplexing optical signals using bandpass filters is that the filters, as well as the optical sources producing the multiplexed channels, are subject to wavelength drifting as a function of environmental conditions and time. As a result, a mismatch is likely to develop between the wavelength of a channel and the passband of the filter dedicated to demultiplexing that signal. Given the typically narrow passbands of the filters, it is likely that any drifting by either the filters or the optical sources would result in a demultiplexing failure and the loss of the encoded signal.

The above problem of drift can be corrected for by continually monitoring and adjusting the optical sources and receiving filters. However, such correction measures prove expensive as a result of labor costs (if they are manually implemented), or as a result of increased hardware costs (if they are automatically implemented via active feedback loops). In either case, the monitoring and adjusting of the sources and filters does not offer a practical solution to the problems associated with wavelength drift within a wavelength-multiplexed optical transmission system.

### Summary Of The Invention

The present invention overcomes the deficiencies of prior wavelength-multiplexed optical signal identification techniques by modulating each of the individual channels within a multiplexed signal at a unique low-frequency. This modulation is performed at the transmission site of the optical signal, and the specific frequencies of modulation are chosen to be very much lower than the low-frequency cut-off of any other information encoded upon the optical signals. At the reception site of the multiplexed signal, the invention directs each of the individual optical signals, as a function of the particular low-frequency modulation evident upon each signal, to a particular tunable Fabry-Perot ("FP") optical filter. As FP filters have the ability to track the frequency of an individual channel, problems associated with wavelength drift are eliminated. Furthermore, FP filters offer a very narrow optical passband, allowing inter-channel cross-talk and noise levels to be minimized within wavelength-multiplexed optical systems employing the signal identification technique.

### Brief Description Of The Drawing

In the drawing:
FIG. 1 shows, in simplified form, a block diagram of a frequency-multiplexed optical communication system employing the invention;
FIG. 2 shows, in simplified form, a schematic diagram of detector circuit 109 of FIG. 1;
FIG. 3A provides a graphical illustration of the signal output from splitter/sensor 112 of FIG. 1 as FP filter 103 of FIG. 1 is scanned across a band including wavelengths \i, x₂, and À₃;
FIG. 3B provides a graphical illustration of the signals input to, and out from, comparator 204 of FIG. 2;
FIG. 3C provides a graphical illustration of the signals input to, and out from, comparator 203 of FIG. 2; and
FIG. 3D provides a graphical illustration of the signals input to, and out from, flip-flop 206 of FIG. 2.

### Detailed Description Of The Invention

In a preferred embodiment of the invention, a wavelength-multiplexed optical signal, comprised of three individual optical component signals having wavelengths of \i, x₂, and À₃, is transmitted from a source to a receiver via an optical fiber. Each of these individual component signals, within the wavelength-multiplexed optical signal, is amplitude modulated at a unique low-frequency -- f₁, f₂, and f₃, respectively. This low-frequency amplitude modulation is independent of, and in addition to, any other modulation of the optical signals (such as high-frequency digital or analog information encoding). Any one of a number of well-known techniques for amplitude modulating an optical signal may be employed to effect the low-frequency modulation of the individual component optical signals. One such technique employs alternating waveforms of frequencies f₁, f₂ and f₃ to modulate the bias current of each of the lasers producing the individual optical signals. While the specific low-frequency modulation technique is immaterial, the modulation frequencies must be very much lower than the low-frequency cut-off of any receiver coupled to the optical fiber for purposes of decoding high-frequency digital or analog information. This ensures that the reception of any high-frequency information carried by the optical component signals will not be interfered with as a result of the low-frequency modulation.

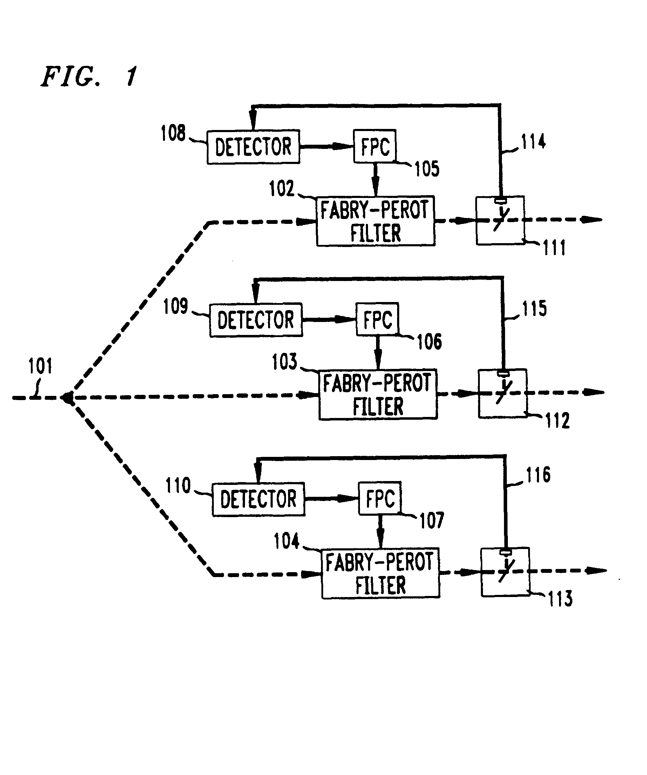

FIG. 1 shows a simplified block diagram of a receiver which employs the invention to demultiplex a wavelength-multiplexed optical signal, in which each of the individual optical signals are low-frequency modulated as described above. The pathways illustrated as dotted lines in FIG. 1 carry optical signals, and the pathways illustrated as solid lines carry electrical signals. In operation, the wavelength-multiplexed optical signal traveling along optical fiber 101 is split, and input to three independently tunable FP filters (102, 103, and 104). Each FP filter is scanned over range of wavelengths, including λ₁, X₂, and À₃. This scanning is accomplished via associated FP filter controllers ("FPCs"), labeled as 105, 106, and 107 in FIG. 1. The optical output of the tunable FP filters fluctuate as the passband of each FP filter is scanned over the range of wavelengths, with each optical output peaking as the passband of a given FP filter is tuned to the fundamental wavelength of any one the three component signals of the input optical signal. Optical splitter/sensors 111, 112, and 113 are shown to be coupled to the output of each FP filter. These splitter/sensors each produce an electrical signal proportional to the optical output of an associated FP filter. These electrical signals are each transmitted (via lines 114, 115, and 116) to a detector circuit (108, 109, and 110). Each of these detector circuits serves to detect a particular one of the three component optical signals, and cause the associated FPC and FP filter to phase-lock onto that optical signal.

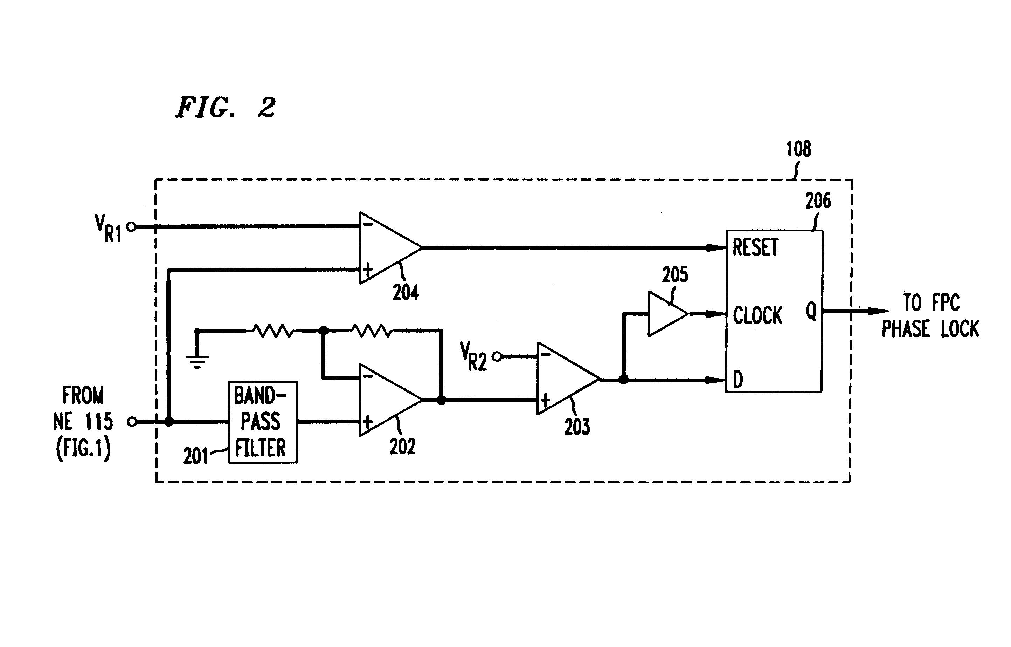

FIG. 2 shows, in simplified form, a schematic diagram of detector circuit 109 (see FIG. 1). The circuit detects the presence of one particular multiplexed optical signal which is modulated at the specific low-frequency f₂, and enables FP filter 103 to phase-lock onto the optical component signal having the fundamental wavelength of X₂. As is shown, the circuit of FIG. 2 includes bandpass filter 201, amplifier 202, comparators 203 and 204, buffer 205, and flip-flop 206.

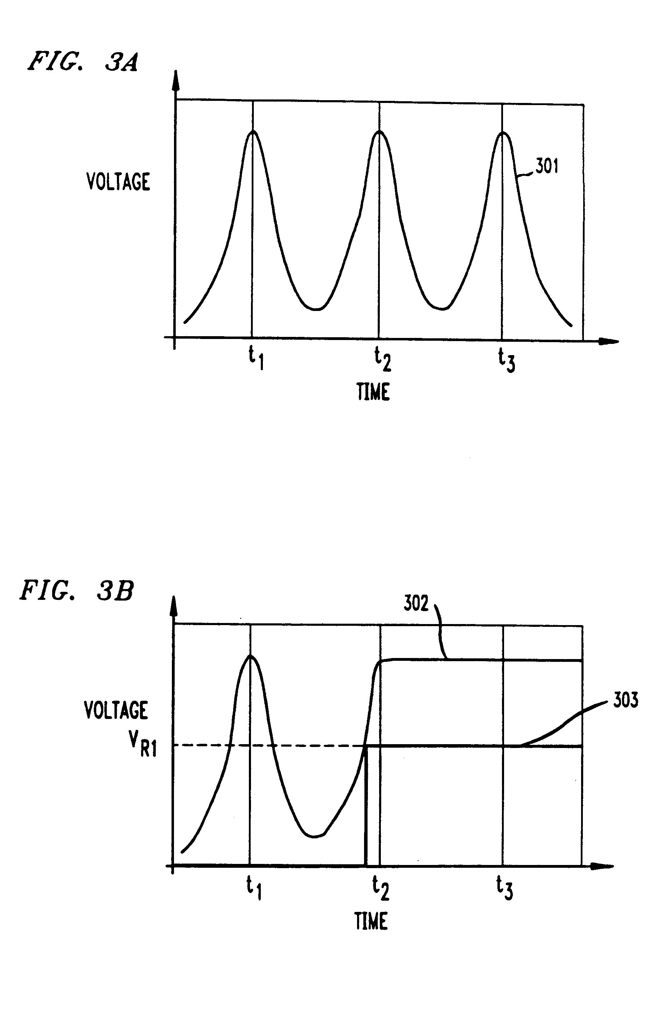

The positive input of comparator 204 receives an electrical signal from line 115. This signal is proportional to the optical output of FP filter 103 (FIG. 1). The output of comparator 204 attains a positive value when the amplitude of the signal upon line 115 exceeds that of reference voltage V_{R1}. The value of V_{R1} is fixed at a level which allows the output of comparator 203 to attain a positive value whenever the electrical input signal upon line 115 increases in response to the FP filter 103 (FIG. 1) peaking as FP filter 103 is scanned across wavelengths λ₁, x₂, and λ₃. Waveform 301 of FIG. 3A provides a graphical illustration (amplitude versus time) of the signal which would be evident upon line 115 if FP filter 103 (FIG. 1) were freely scanned across a band including wavelengths λ₁, X₂, and λ₃. During the scan, FP filter 103 is tuned to wavelength λ₁ at t₁, to wavelength X₂ at t₂, and to wavelength X₃ at t₃. FIG. 3B provides a graphical illustration (amplitude versus time) of the signal upon line 115 (waveform 302), the output of comparator 204 (waveform 303), and the level of reference voltage V_{R1}, when FP filter 103 (FIG. 1) is phase-locked to the optical component signal having a fundamental wavelength of X₂ (as it would in the normal practice of the invention). For purposes of illustration, the waveforms in FIG. 3B have not been drawn to the same scale. Note that the output of comparator 204 is a TTL signal on the order of 4 to 5 volts, while the level of V_{R1} is typically no more than several hundred millivolts. The process by which this phase-locking is accomplished is discussed below.

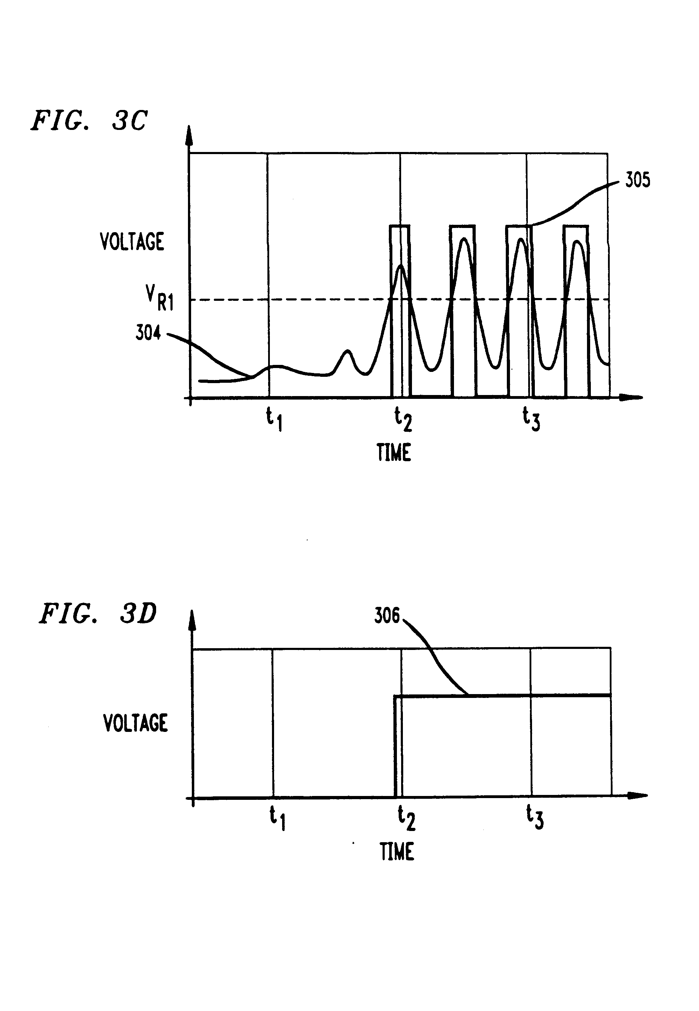

The signal evident upon line 115 is also input to bandpass filter 201. Bandpass filter 201 is adapted to pass electrical signals having a frequency of f₂ to amplifier 202. The amplified bandpass filtered signal output from amplifier 202 is then fed to the positive input of comparator 203. The output of comparator 203 attains a positive value when the amplitude of the input bandpass filtered signal exceeds that of reference voltage V_{R2}. The value of V_{R2} is fixed at sufficiently high level to cause the output of comparator 203 to attain a positive value only when a signal having a fundamental frequency of f₂ is being passed by filter 201. FIG. 3C provides a graphical illustration (amplitude versus time) of the signal output by bandpass filter 201 (waveform 304), the output of comparator 203 (waveform 305), and the level of reference voltage V_{R2}, and as FP filter 103 (FIG. 1) is scanned and phase-locked. As with FIG. 3B, the waveforms in FIG. 3C are not drawn to the same scale. The output of comparator 203 is a TTL signal on the order of 4 to 5 volts, while the level of V_{R2} is typically no more than several hundred millivolts.

As shown in FIG. 2, the output of comparator 203 is fed to the data input of flip-flop 206, and to buffer 205. The signal from comparator 203 evident at the flip-flop data input serves to trigger the flip-flop, while the delayed pulse provided by buffer 205 serves as clock signal, thereby ensuring a stable transition by flip-flop 206. FIG. 3D provides a graphical illustration (amplitude versus time) of the signal 306 which is output by flip-flop 206. This output is fed to FPC 106 (FIG. 1).

In response to receiving the output pulse from flip-flop 206 (FIG. 2), FPC 106 (FIG. 1) halts the wavelength scanning of FP filter 103, and places that FP filter into a phase-lock mode. Since detector circuit 109 ensures that the pulse output by flip-flop 206 coincides with passband of FP filter 103 being centered upon X₂, FP filter 103 is locked onto the optical component signal having a wavelength of x₂.

Detector circuits 108 and 110 (FIG. 1) have configurations similar to that of detector circuit 109. However, the bandpass filter within detector circuit 108 is tuned to the frequency f₁, and the bandpass filter within detector circuit 110 is tuned to the frequency f₃. As a result, FPC 105 places FP filter 102 into a phase-lock mode when the passband of FP filter 102 is centered upon À₁ (as the component optical signal of wavelength λ₁ is modulated at frequency f₁). Similarly, FPC 107 places FP filter 104 into a phase-lock mode when the passband of FP filter 104 is centered upon X₃ (as the component optical signal of wavelength X₃ is modulated at frequency f₃).

## Claims

1. A method for demultiplexing an individual optical signal of fixed optical wavelength contained within a wavelength-multiplexed optical signal, in which said individual optical signal is modulated at a specific frequency, comprising the steps of:
scanning said multiplexed optical signal with a tunable bandpass optical filter,
identifying said individual optical signal by detecting said specific low-frequency modulation as the passband of said tunable bandpass optical filter is scanned to encompass the optical wavelength of said individual optical signal;
locking said tunable bandpass optical filter onto the optical wavelength of said individual optical signal in response to said detection of said low-frequency modulation.

2. A method for demultiplexing an individual information-encoded optical signal of fixed optical wavelength contained within a wavelength-multiplexed optical signal, in which said individual information-encoded optical signal is modulated at a specific low-frequency outside the bandwidth of any information encoded upon said individual optical signal, comprising the steps of:
scanning said multiplexed optical signal with a tunable bandpass optical filter,
identifying said individual information-encoded optical signal by detecting said specific low-frequency modulation as the passband of said tunable bandpass optical filter is scanned to encompass the optical wavelength of said individual information-encoded optical signal;
locking said tunable bandpass optical filter onto the optical wavelength of said individual information-encoded optical signal in response to said detection of said low-frequency modulation.

3. A method for demultiplexing information-encoded optical signals having fixed optical wavelengths from a wavelength-multiplexed optical signal, in which each of said individual information-encoded optical signals is modulated at a unique low-frequency outside the bandwidth of any information encoded upon said optical signals, comprising the steps of:
scanning said multiplexed optical signal with a tunable bandpass optical filter,
identifying an individual information-encoded optical signal by detecting the unique low-frequency modulation as the passband of said tunable bandpass optical filter is scanned to encompass the optical wavelength of said identified individual information-encoded optical signal;
locking said tunable bandpass optical filter onto the optical wavelength of said individual information-encoded optical signal in response to said detection of said unique low-frequency modulation.
